# EUROPÄISCHE PATENTSCHRIFT

(11) **EP 0 603 202 B1**
(45) Veröffentlichungstag und Bekanntmachung des Hinweises auf die Patenterteilung: **20.03.1996**
(21) Anmeldenummer: 92916480.4
(22) Anmeldetag: 06.08.1992
(51) Int. Cl.: A61C 1/05

(54) **ZAHNÄRZTLICHES HANDSTÜCK**
MEDICAL DENTISTRY HANDPIECE
PIECE A MAIN UTILISEE EN MEDECINE DENTAIRE

(30) Priorität: 13.09.1991 AT 1839/91; 06.12.1991 DE 9115190 U
(43) Veröffentlichungstag der Anmeldung: 29.06.1994
(73) Patentinhaber: IMTEC INNOVATIVE MEDIZINTECHNIK GESELLSCHAFT M.B.H., A-5400 Hallein (AT)
(72) Erfinder: ROSENSTATTER, Otto, A-5164 Seeham (AT)
(74) Vertreter: Torggler, Paul, Dr.
(86) Internationale Anmeldenummer: AT9200109
(87) Internationale Veröffentlichungsnummer: WO9305723

(56) Entgegenhaltungen:
- FR-A- 2 310 736
- FR-A- 2 440 184
- FR-A- 2 477 864
- US-A- 3 439 422

## Beschreibung

Die Erfindung bezieht sich auf ein zahnärztliches Handstück, mit einem Griffteil, welcher einen Motor enthält, zu dem eine mittels eines am Griffteil angeordneten Stellrings durchflußgesteuerte Treibluftleitung führt, und einem über einen Halsteil an den Griffteil anschließbaren Kopfteil, welcher ein rotierendes Werkzeug trägt.

Derartige Handstücke sind beispielsweise aus AT-A-347 013 sowie DE 30 09 337 bekannt. Dabei ist der im Griffteil angeordnete Antrieb als pneumatischer Lamellenmotor ausgebildet, der aus einem hülsenförmigen, den Stator bildenden Gehäuse und einem darin angeordneten Rotor besteht, dessen Drehachse zu der Achse der kreiszylindrischen Innenwandung parallel verläuft und gegenüber letzterer versetzt ist, wobei in Längsschlitzen des Rotors mit ihren äußeren Enden zu der in den Raum zwischen dem Rotor und der kreiszylindrischen Innenwandung mindestens eine Lufteinlaßöffnung für Druckluft und mindestens eine Luftauslaßöffnung einmünden. Bei Beaufschlagung des Motors mit Druckluft tritt letztere durch die Lufteinlaßöffnung(en) in den Raum zwischen Rotor und kreiszylindrischer Innenwandung und schiebt die nächstliegende, am weitesten aus dem Rotor herausstehende Lamelle vor sich her, so daß der Rotor zu drehen beginnt und die nächste Lamelle von der Druckluft beaufschlagt wird.

Der mit einer derartigen Einrichtung erzielbare Drehzahlbereich des Werkzeuges liegt zwischen 0 und 40.000 und wird in der Fachsprache als Low-speed-Bereich bezeichnet. Die Einstellung der gewünschten Drehzahl erfolgt mittels eines Stellrings, welcher ausgehend von der Nullstellung auf verschieden raschen Rechts- oder Linkslauf eingestellt werden kann.

Für höhere Drehzahlen verwendet man heute entweder mechanische Antriebe oder aber Turbinen mit Luftantrieb, welche das rotierende Werkzeug unmittelbar umgeben (vgl. AT-A 344 875). Solche Turbinen sind in einem Drehzahlbereich von 200 - 350.000 zu betreiben.

Geht man derzeit von einem Handstück mit Antrieb im Griffteil zu einem Handstück mit Kopfturbine über, wechselt man den Griffteil. Das bedeutet nicht nur einen gewissen manipulativen Aufwand, sondern auch erhöhte Kosten wegen einer größeren Zahl von Griffteilen, die zur Verfügung zu halten sind. Der Erfindung liegt demgegenüber die Aufgabe zugrunde, einen möglichst universal verwendbaren Griffteil zu schaffen. Erfindungsgemäß wird dies dadurch erreicht, daß der Griffteil eine zusätzliche Treibluftleitung enthält, welche zur Verbindungsstelle von Griffteil und Halsteil führt und daß durch den Stellring die Treibluft wahlweise in eine der beiden Treibluftleitungen einleitbar ist.

Diese Maßnahme erlaubt es, mit einer geringeren Zahl von Griffteilen auszukommen als bisher, wodurch es erstmals vertretbar wird, den Griffteil relativ aufwendig zu gestalten, beispielsweise in dem im Griffteil teure optische Einrichtungen angeordnet werden.

Vorteilhafterweise ist vorgesehen, daß die Stelleinrichtung als Stellring ausgebildet und der Stellring drehfest mit einer auf dem Anschlußstück drehbar angeordneten Hülse verbunden ist.

Durch diese Maßnahme wird erreicht, daß bei konstanten Betriebsbedingungen der gesamte von der Hand des Arztes umfaßte Bereich des Handstückes von Verdrehungen des Versorgungsschlauches unbeeinflußt bleibt. Änderungen der Drehzahl und Drehrichtung sind hingegen leicht möglich, daß der Stellring wegen seiner Verbindung mit der den Anschlußteil umfassenden Hülse mehr als hinreichend breit ist.

Ein besonderer Vorteil liegt darin, daß der ohnedies notwendige Stellring zusammen mit dieser Hülse auch die Kupplung zwischen Anschlußstück und Griffteil vermitteln kann, welche beispielsweise durch federnde Zungen konstruktiv verwirklicht werden kann.

Wenn vorgesehen wird, daß das Anschlußstück in einem Rohr endet, welches einen am Griffteil angesetzten Zapfen umfaßt, besteht die Möglichkeit, die das Anschlußstück umgebende Hülse und die daran als Kupplungsmittel vorgesehenen federnden Zungen relativ dünn zu machen, da sie eine Abstützung am Anschlußstück erfahren.

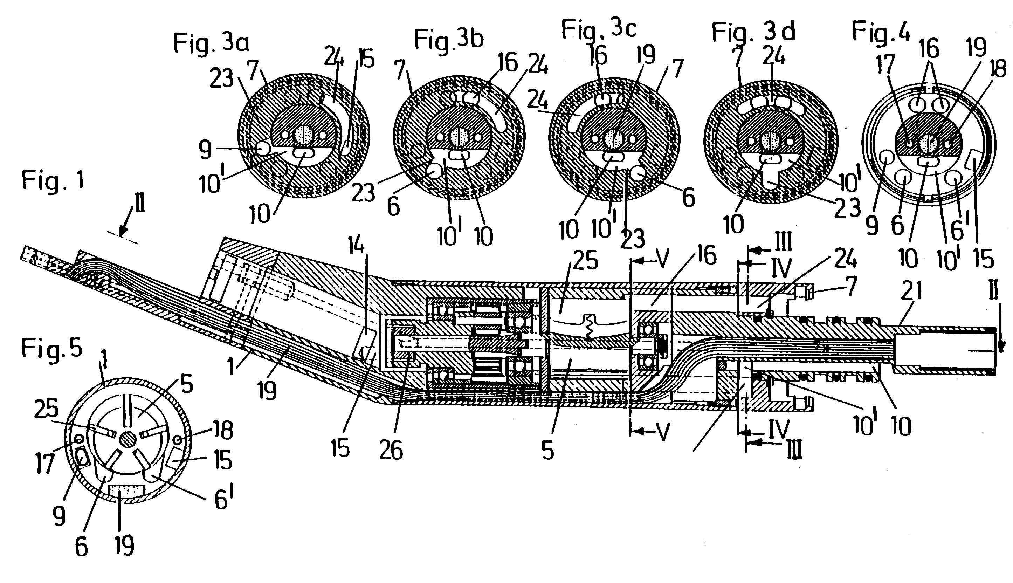

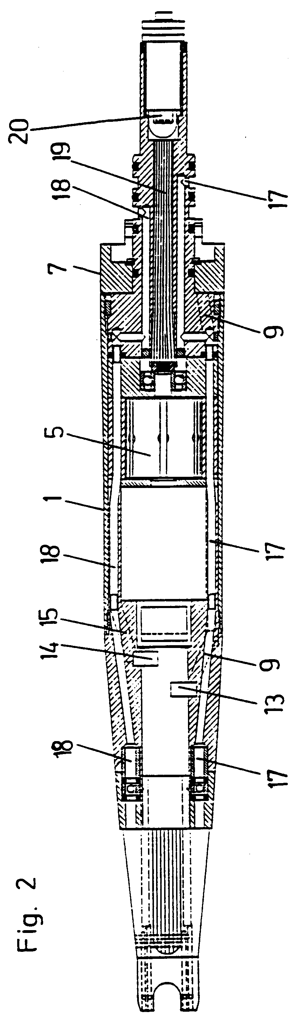

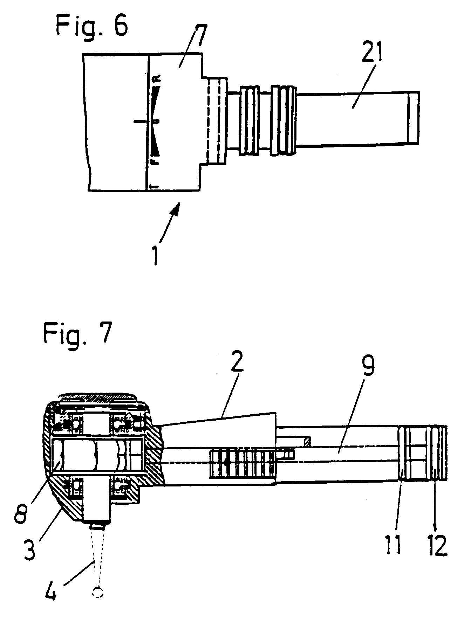

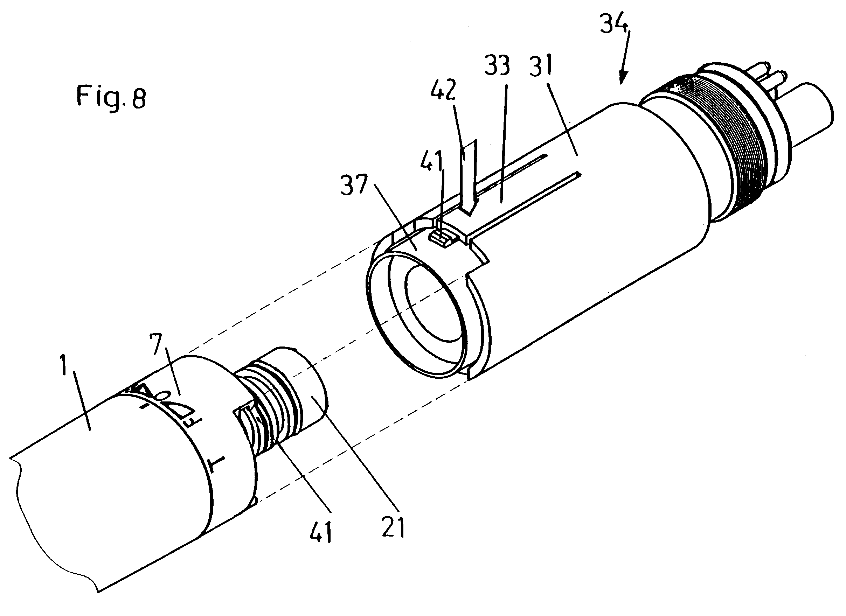

Weitere Einzelheiten der Erfindung werden anschließend anhand der Zeichnung erläutert. In dieser ist
Fig. 1 ein vertikaler Längsschnitt durch den erfindungsgemäß ausgestalteten Griffteil eines zahnärztlichen Handstückes, Fig. 2 der Schnitt durch das Handstück von Fig. 1 nach der Linie II-II in Fig. 1, Fig. 3 a-d Schnitte nach der Linie III-III in Fig. 1 entsprechend verschiedenen Stellungen des Stellringes 7, Fig. 4 ein Schnitt nach der Linie IV-IV in Fig. 1, Fig. 5 ein Schnitt nach der Linie V-V in Fig. 1, Fig. 6 die Seitenansicht des Anschlußendes des Griffteiles 1, Fig. 7 ein mit dem Griffteil nach Fig. 1 und 2 verbindbarer Werkzeughalter mit Halsteil 2 und Kopfteil 3 und Fig. 8 der Verbindungsbereich des Griffteiles 1 mit einem Anschlußstück 31.

In Fig. 1 ist der Griffteil 1 eines zahnärztlichen Handstücks dargestellt, der einerseits (in der Zeichnung rechts) mit einem Anschlußstück für Versorgungsleitungen von Treibluft, Kühlwasser, Kühlluft usw., andererseits mit einem auswechselbaren Werkzeughalter verbindbar ist. Der Griffteil 1 enthält einen Motor 5, welcher über ein Getriebe 26 die in üblicher Weise durch den Halsteil eines Werkzeughalters verlaufende Antriebswelle antreiben kann. Dieser Motor 5 ist vorzugsweise ein Lamellenmotor der in Fig. 5 dargestellten Art, bei welchem ein auf einer zentralen Achse in einer exzentrischen Bohrung umlaufender Rotor mit radial verschiebbaren, federbelasteten Lamellen 25 bestückt ist. Die Umlaufrichtung dieses Rotors hängt davon ab, ob Treibluft durch den Einlaß 6 zugeführt und dann bei 6' abgeleitet wird oder ob durch die Leitung 6' die Luft zugeführt und durch die Leitung 6' abgeführt wird.

Wie später noch im einzelnen erläutert wird, kann der Antrieb eines Werkzeuges bei stillstehendem Motor 5 dadurch erfolgen, daß durch den Griffteil 1 Treibluft einer Turbine 8 zugeleitet wird, welche im Kopfteil 3 eines aus Kopfteil 3 und Halsteil 2 bestehenden Werkzeughalters für ein Werkzeug 4 angeordnet ist (vgl. Fig. 7).

Zur Umschaltung zwischen den einzelnen Antriebsarten dient der in Fig. 6 dargestellte Stellring 7, welcher drehbar auf dem Anschlußstutzen 21 des Griffteiles 1 gelagert ist. In der Stellung T ist die Turbine 8 angetrieben, in den Stellungen F und R erfolgt der Antrieb des Motors 5 in einander entgegengesetzten Richtungen, die Stellung O ist die Neutralstellung.

Die Funktion des Stellringes 7 ist aus Fig. 3 a-d ersichtlich. Der Stellring weist einerseits eine von einer zentralen Bohrung ausgehende radiale Erweiterung 23 zur Freigabe des Treiblufteinlasses, andererseits einen tangential verlaufenden Längsschlitz 24 für die Rückluft auf. Die Treibluft gelangt zur Erweiterung 23 des Stellringes 7 durch die Zufuhrleitung 10 im Anschlußstutzen 21, welche sich am linken Ende zu einer kreissegmentförmigen Ausnehmung 10' erweitert, welche mit der Erweiterung 23 des Stellringes 7 kommuniziert.

Die Möglichkeiten, die zur Auswahl stehen, ergeben sich insgesamt aus Fig. 4. Die Treibluft kann wahlweise über die Leitungen 6 bzw. 6' dem Motor 5 zugeleitet und über die Rückleitungen 16 zurückgeführt werden oder aber über die Treibluftleitung 9 zur Turbine 8 geführt werden und über die Rückleitung 15 zurücklaufen. Zusätzlich zu den erwähnten Treibluftleitungen verlaufen im Griffteil 1 noch eine Kühlwasserleitung 17, eine Kühlluftleitung 18 und eine Lichtleitung 19, auf welche später eingegangen wird. Zum leichteren Verständnis sind auf die Schnittebene von Fig. 4 auch noch die gemeinsame Treibluftzufuhr 10 und die Ausnehmung 10 projiziert, welche sich an sich rechts von der Schnittebene befinden.

In Fig. 3 a-d ist im einzelnen dargestellt, wie durch das Verdrehen des Stellringes 7 die gewünschte Auswahl zwischen den Antriebsarten getroffen werden kann. In der Stellung nach Fig. 3a gibt die Erweiterung 23 des Stellringes die Treibluftleitung 9 frei. Wie aus Fig. 2 ersichtlich, gelangt die Treibluft durch diese Leitung zu einer Ausnehmung 13, welche zwischen den O-Ringen 11 und 12 des in Fig. 7 dargestellten Werkzeughalters mündet, sodaß sich die Treibluftleitung 9 bis zur Turbine 8 fortsetzt. Die Rückluft fließt durch eine Leitung, welche in der Darstellung nach Fig. 7 von der Treibluftleitung 9 verdeckt ist und welche an der Stirnseite des Halsteiles 2 rechts vom O-Ring 12 mündet. Dieser O-Ring verläuft bei montiertem Werkzeughalter zwischen den Ausnehmungen 13, 14, sodaß die Rückluft in der Ausnehmung 14 und von dort in die Leitung 15 gelangt, welche in der Stellung nach Fig. 3a vom Längsschlitz 24 freigegeben wird.

In der Stellung des Stellringes 7 gemäß Fig. 3b ist die Treibluftleitung 6 freigegeben, welche zum Motor 5 führt. Gleichzeitig kann die Rückluft durch eine der Leitungen 16 durch den Längsschlitz 24 im Stellring 7 ausfließen. In der Stellung gemäß Fig. 3c ist die Treibluftleitung 6' freigegeben und die Drehrichtung des Motors 5 kehrt sich um. In der Stellung nach Fig. 3d ist die Treibluft abgesperrt.

Zusätzlich zu den Treibluftleitungen, deren alternative Beaufschlagung Gegenstand der Erfindung ist, verlaufen im Griffteil 1 weitere Leitungen, welche anschließend noch kurz beschrieben werden, da ihre konstruktivmäßige Unterbringung Voraussetzung für die praktische Anwendbarkeit der Erfindung ist. So verläuft an der Unterseite des Griffteiles 1 die Lichtleitung 19, für das von einer Lichtquelle 20 kommenden Licht. An der linken Seite des Griffteiles 1 verläuft die Kühlwasserleitung 17, an der rechten Seite die Kühlluftleitung 18. Diese Leitungen setzen sich bis zur Spitze des Griffteiles 1 fort, wo sich ihre Zweige überkreuzen, sodaß in bekannter Weise ein Kühlspray gebildet wird.

Vorteilhaft ist die Anordnung des Stellringes 7 am Ende des Griffteiles 1, wie sie besonders deutlich aus Fig. 8 ersichtlich ist. Der Stellring 7 ist über die Zungen 33 mit der Hüle 31 verbindbar, da am Stellring 7 und den Zungen 33 korrespondierende Rastglieder 41 vorgesehen sind, welche beim axialen Zusammenschieben der Teile 34 und 1 eine Verbindung zwischen Stellring 7 und Hülse 31 herstellen. Die Lösung dieser Verbindung erfolgt durch Eindrücken der Zungen 33, wie durch den Pfeil 42 angedeutet.

Dadurch, daß das Anschlußstück 34 ein Rohr 37 umfaßt, welches den endseitigen Zapfen 21 des Greiffteiles 1 aufnimmt, kann die Hülse 31 relativ dünnwandig sein, da das Rohr 37 die Festigkeit des Anschlußstückes 34 sicherstellt. Der Zapfen 21 ist im Rohr 37 drehbar, wobei zwischen Dichtungen angeordnete Ringnuten am Zapfen 21 den Übertritt der Versorgungsmedien in den Griffteil 1 ermöglichen.

Bei der in Fig. 8 dargestellten Ausführung des Stellringes 7 wurde von der Annahme ausgegangen, daß der Griffteil in erfindungsgemäßer Weise von Treibluft durchströmt ist, welche wahlweise zur Turbine 8 (T) oder zum Luftmotor 5 (F-O-R) geleitet werden kann. Die Maßnahme ist jedoch auch anwendbar, wenn der Stellring 7 einen Elektromotor steuert.

## Patentansprüche

1. Zahnärztliches Handstück, mit einem Griffteil, welcher einen Motor enthält, zu dem eine Treibluftleitung führt, und einem über einen Halsteil an den Griffteil anschließbaren Kopfteil, welcher ein rotierendes Werkzeug trägt, dadurch gekennzeichnet, daß der Griffteil (1) eine zusätzliche Treibluftleitung (9) enthält, welche zur Verbindungsstelle von Griffteil (1) und Halsteil (2) führt und daß durch eine am Griffteil (1) vorgesehene Stelleinrichtung die Treibluft wahlweise in eine der beiden Treibluftleitungen (6, 6' bzw. 9) einleitbar ist.

2. Zahnärztliches Handstück nach Anspruch 1, dadurch gekennzeichnet, daß die Stelleinrichtung als an sich bekannter Stellring (7) ausgebildet ist, welcher wahlweise eine der beiden Treibluftleitungen (6, 6' bzw. 9) verschließt.

3. Zahnärztliches Handstück nach Anspruch 2, dessen Griffteil drehbar mit einem Anschlußstück verbunden ist, welches die Verbindung zu einem Versorgungsschlauch für den mittels des Stellringes veränderbaren Antrieb des Werkzeuges herstellt, dadurch gekennzeichnet, daß der Stellring (7) drehfest mit einer auf dem Anschlußstück (34) drehbar angeordneten Hülse (31) verbunden ist.

4. Zahnärztliches Handstück nach Anspruch 3, dadurch gekennzeichnet, daß Griffteil (1) und Anschlußstück (34) in Axialrichtung durch eine lösbare Verbindung zwischen Stellring (7) und Hülse (31) verbunden sind.

5. Zahnärztliches Handstück nach Anspruch 4, dadurch gekennzeichnet, daß zur lösbaren Verbindung von Stellring (7) und Hülse (31) diese mit federnden Zungen (33) versehen ist.

6. Zahnärztliches Handstück nach einem der Ansprüche 3 bis 5, dadurch gekennzeichnet, daß das Anschlußstück (34) in einem Rohr (37) endet, welches einen am Griffteil (1) angesetzten Zapfen (21) umfaßt.

## Claims

1. Dental handpiece comprising a grip end which contains a motor to which leads a propellant air line and a headpice which can be attached by way of a neck piece to the grip end and which carries a rotating tool, characterized in that the grip end (1) contains an additional propellant air line (9) which runs to the attachment point between grip end (1) and neck piece (2), and that the propellant air can be introduced selectively into one of the two propellant air lines (6, 6' or 9) by means of an adjusting mechanism provided at the grip end (1).

2. Dental handpiece as claimed in claim 1, characterized in that the adjusting mechanism is designed as a well-known adjusting ring (7) which closes selectively one of the two propellant air lines (6, 6' or 9).

3. Dental handpiece as claimed in claim 2, whose grip end is connected rotatably to a connecting piece which produces the connection to a supply hose for the drive of the tool than can be changed by means of the adjusting ring, characterized in that the adjusting ring (7) is connected rigidly to a sleeve (31) which is mounted rotatably on the connecting piece (34).

4. Dental handpiece as claimed in claim 3, characterized in that the grip end (1) and the connecting piece (34) are connected in the axial direction by means of a detachable connection between adjusting ring (7) and sleeve (31).

5. Dental handpiece as claimed in claim 4, characterized in that said sleeve is provided with springy tongues (33) in order to connect detachably adjusting ring (7) and sleeve (31).

6. Dental handpiece as claimed in one of claims 3 to 5, characterized in that the connecting piece (34) terminates in a pipe (37) which envelops a cone (21) attached to the grip end (1).

## Revendications

1. Outillage à main en chirurgie dentaire, avec une partie formant poignée, qui contient un moteur auquel conduit une conduite d'air moteur, et une partie formant tête qui peut se raccorder à la partie formant poignée par l'intermédiaire d'une partie formant col et porte un outil rotatif, caractérisé par le fait que la partie formant poignée (1) contient une conduite supplémentaire (9) d'air moteur qui conduit à l'endroit de la liaison entre la partie formant poignée (1) et la partie formant col (2) et qu'au moyen d'un dispositif réglant prévu dans la partie formant poignée (1), on peut envoyer au choix l'air moteur dans l'une des deux conduites d'air moteur (6, 6' ou 9).

2. Outillage à main en chirurgie dentaire selon la revendication 1, caractérisé par le fait que le dispositif réglant est conçu en tant que bague réglante (7) qui est connue en soi et obture au choix l'une des deux conduites d'air moteur (6, 6' ou 9).

3. Outillage à main en chirurgie dentaire selon la revendication 2, dont la partie formant poignée est reliée, avec liberté de rotation relative à un raccord qui réalise la liaison avec un tube souple d'alimentation pour l'entraînement, que l'on peut modifier au moyen de la bague réglante, du moteur, caractérisé par le fait que la bague réglante (7) est reliée, sans possibilité de rotation relative, à une douille (31) disposée, avec liberté de rotation relative, sur le raccord (34).

4. Outillage à main en chirurgie dentaire selon la revendication 3, caractérisé par le fait que la partie formant poignée (1) et le raccord (34) sont reliés, selon la direction axiale, par une liaison amovible entre la bague réglante (7) et la douille (31).

5. Outillage à main en chirurgie dentaire selon la revendication 4, caractérisé par le fait que pour réaliser la liaison amovible entre la bague réglante (7) et la douille (31), celle-ci est munie de languettes élastiques (33).

6. Outillage à main en chirurgie dentaire selon l'une des revendications 3 à 5, caractérisé par le fait que le raccord (34) se termine dans un tube (37) qui enserre un embout (21) rapporté sur la partie formant poignée (1).
